# EUROPEAN PATENT SPECIFICATION

(11) **EP 4 060 579 B1**
(45) Date of publication and mention of the grant of the patent: **29.10.2025**
(21) Application number: 22155643.4
(22) Date of filing: 08.02.2022
(51) Int. Cl.: G06Q 10/06

(54) **METHOD AND SYSTEM FOR EVALUATING PERFORMANCE OF DEVELOPERS USING ARTIFICIAL INTELLIGENCE (AI)**
VERFAHREN UND SYSTEM ZUR BEWERTUNG DER LEISTUNG VON ENTWICKLERN MITTELS KÜNSTLICHER INTELLIGENZ (KI)
PROCÉDÉ ET SYSTÈME D'ÉVALUATION DE PERFORMANCE DE DÉVELOPPEURS UTILISANT L'INTELLIGENCE ARTIFICIELLE (IA)

(30) Priority: 16.03.2021 US 202117202926
(43) Date of publication of application: 21.09.2022
(73) Proprietor: HCL Technologies Limited, New Delhi 110019 (IN)
(72) Inventor: SABHARWAL, Navin, New Delhi 110014 (IN); AGRAWAL, Amit, Mathura 281001 (IN)
(74) Representative: Studio Torta S.p.A.

(56) References cited:
- EP-A1- 2 889 822
- US-A1- 2018 276 562
- US-A1- 2019 095 843
- US-A1- 2020 225 945

## Description

### Technical Field

Generally, the disclosure relates to Artificial Intelligence (Al). More specifically, the disclosure relates to a method and system for evaluating performance of employees (such as, developers) using Al based technologies.

### Background

Typically, software developers may be evaluated for performance on various factors, such as, modules, applications or features of products developed by them, work experience in a current organization, and overall experience as a Subject Matter Expert (SME) in a particular technology. Traditionally in a software development process, multiple software developers may work on development of features of the product(s) assigned to them as per their skillsets. This makes it difficult for reviewers to provide feedback manually for performance evaluation to the software developers for issues faced in the developed modules and applications by keeping a track on individual performance of a software developer at the same time. However, such performance evaluation may be crucial in any organization for factors, such as, but not limited to, providing an appraisal or a rating that clearly distinguishes an individual software developer amongst others and also providing the training to the software developer to enhance the skillset, basedon the performance evaluation. US2019095843 discloses a method for evaluating the performance of one or more employees of an organization. EP2889822 discloses an employee value-retention risk calculator. US2018276562 discloses a method for bug categorization and team boundary inference via automated bug detection. US 2020225945 discloses a method for analysing computer software source code and determining its quality of implementation.

Accordingly, there is a need for a method and system for evaluating the performance of software developers.

### SUMMARY OF INVENTION

In accordance with one embodiment, a method of evaluating performance of developers using Al is disclosed. The method may include receiving each of a plurality of performance parameters associated with a set of developers. The method may include creating one or more feature vectors corresponding to each of the plurality of performance parameters, based on one or more features determined for each of the plurality of performance parameters. It should be noted that, the one or more feature vectors are created based on a first pre-trained machine learning model. The method may include assessing the one or more feature vectors, based on the first pre-trained machine learning model. The method may include classifying the set of developers into one of a set of performance categories based on the assessing of the one or more feature vectors. The method may include evaluating the performance of at least one of the set of developers, based on an associated category in the set of performance categories, inresponse to the classifying.

In another embodiment, a system for evaluating performance of developers using Artificial Intelligence (AI) is disclosed. The system includes a processor and a memory communicatively coupled to the processor. The memory may store processor-executable instructions, which, on execution, may causes the processor to receive each of a plurality of performance parameters associated with a set of developers. The processor-executable instructions, on execution, may further cause the processor to create one or more feature vectors corresponding to each of the plurality of performance parameters, based on one or more features determined for each of the plurality of performance parameters. It should be noted that, the one or more feature vectors are created based on a first pre-trained machine learning model. The processor-executable instructions, on execution, may further cause the processor to assess the one or more feature vectors, based on the first pre-trained machine learning model. The processor- executable instructions, on execution, may further cause the processor to classify the set of developers into one of a set of performance categories based on the assessing of theone or more feature vectors. The processor-executable instructions, on execution, may further cause the processor to evaluate the performance of at least one of the set of developers, based on an associated category in the set of performance categories, in response to the classifying.
In yet another embodiment, a non-transitory computer-readable medium storing computer-executable instruction for evaluating performance of developers using Artificial Intelligence (AI) is disclosed. The stored instructions, when executed by a processor, may cause the processor to perform operations including receiving each of a plurality of performance parameters associated with a set of developers. The operationsmay further include creating one or more feature vectors corresponding to each of the plurality of performance parameters, based on one or more features determined for each of the plurality of performance parameters. It should be noted that, the one or more feature vectors are created based on a first pre-trained machine learning model. The operations may further include assessing the one or more feature vectors, based on the first pre-trained machine learning model. The operations may further include classifying the set of developers into one of a set of performance categories based on the assessing of the one or more feature vectors. The operations may further include evaluating the performance of at least one of the set of developers, based on an associated category inthe set of performance categories, in response to the classifying.

It is to be understood that both the foregoing general description and the following detailed description are exemplary and explanatory only and are not restrictive of the invention, as claimed.

### BRIEF DESCRIPTION OF THE DRAWINGS

The present disclosure can be best understood by reference to the following description taken in conjunction with the accompanying drawing figures, in which like parts may be referred to by like numerals
FIG. 1 illustrates a functional block diagram of an Al based evaluation system for evaluating performance of developers, in accordance with an embodiment.
FIG. 2 illustrates a functional block diagram of various modules of an Al based evaluation system for evaluating performance of developers, in accordance with an embodiment.
FIG. 3 illustrates a flowchart of a method for evaluating performance of developers using AI, in accordance with an embodiment.
FIG. 4 illustrates a flowchart of a method for ranking developers for performance evaluation of the developers, in accordance with an embodiment.
FIG. 5 illustrates a flowchart of a method for generating a feedback for evaluating the performance of developers, in accordance with an embodiment.
FIGs. 6A - 6B illustrate tabular representations for input data corresponding to performance parameters of developers, in accordance with an exemplary embodiment.
FIG. 6C illustrates a tabular representation for identifying a plurality of bugs associated with a module of a product developed to evaluate performance of developers, in accordance with an embodiment.
FIG. 7 illustrates an Al based evaluation system trained on a reinforcement learning approach, in accordance with an exemplary embodiment.
FIG. 8 illustrates an evaluation system that uses inverse reinforcement learning to predict a set of algorithms to perform hyperparameter tuning, in accordance with an exemplary embodiment.
FIG. 9 illustrates creating a new environment for an evaluation system witha transfer learning approach, in accordance with an exemplary embodiment.

### DETAILED DESCRIPTION OF THE DRAWINGS

The following description is presented to enable a person of ordinary skill in the art to make and use the disclosure and is provided in the context of particular applications and their requirements. Various modifications to the embodiments will be readily apparent to those skilled in the art, and the generic principles defined herein may be applied to other embodiments and applications without departing from the spirit and scope of the disclosure. Moreover, in the following description, numerous details are setforth for the purpose of explanation. However, one of ordinary skill in the art will realize that the disclosure might be practiced without the use of these specific details. In other instances, well-known structures and devices are shown in block diagram form in order not to obscure the description of the disclosure with unnecessary detail. Thus, the disclosure is not intended to be limited to the embodiments shown, but is to be accorded the widest scope consistent with the principles and features disclosed herein.

While the disclosure is described in terms of particular examples and illustrative figures, those of ordinary skill in the art will recognize that the disclosure is notlimited to the examples or figures described. Those skilled in the art will recognize that the operations of the various embodiments may be implemented using hardware, software, firmware, or combinations thereof, as appropriate. For example, some processes can be carried out using processors or other digital circuitry under the controlof software, firmware, or hard-wired logic. (The term "logic" herein refers to fixed hardware, programmable logic and/or an appropriate combination thereof, as would be recognized by one skilled in the art to carry out the recited functions). Software and firmware can be stored on computer-readable storage media. Some other processes canbe implemented using analog circuitry, as is well known to one of ordinary skill in the art. Additionally, memory or other storage, as well as communication components, may be employed in embodiments of the invention.

The present disclosure tackles limitations of existing systems to facilitate performance evaluation of software developers (hereinafter referred as developers) using an Al based evaluation system. The present disclosure evaluates performance of a set of developers based on a plurality of parameters associated with each of the set of developers. The plurality of performance parameters may include, but is not limited to, atleast one of efficiency of a developed product associated with a module developed for a product, complexity of the developed product, types of support received from peers, feedback or rating received from managers, quality of the module developed for the product, and technical skills of each of the set of developers. Further, the present disclosure may facilitate computation of ranks of each of the set of developers.

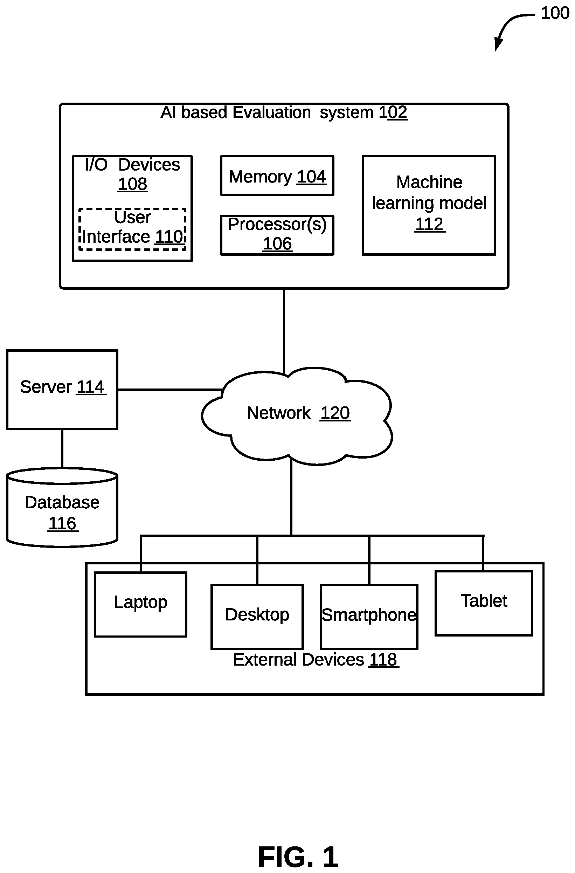

In accordance with an embodiment, the present disclosure may train the AI based evaluation system by exposing to a new environment during initial training process. In addition, the Al based system may identify a plurality of bugs associated witha module of product developed by each of the set of developers based on which a feedback is generated. Further, based on the generated feedback, performance of each of the set of developers may be re-evaluated to re-rank each of the set of developers. This has been explained in detail in conjunction with FIG. 1 to FIG. 9.

Referring now to FIG. 1, a functional block diagram for a network environment 100 of an Al based evaluation system for evaluating performance of developers is illustrated, in accordance with an embodiment. With reference to FIG. 1, there is shown an Al based evaluation system 102 that includes a memory 104, a processor 106, I/O devices 108 and a machine learning (ML) model 112. The I/O devices108 of the Al based evaluation system 102 may further include an I/O interface 110. Further, in the network environment 100, there is shown a server 114, a database 116, external devices 118 and a communication network 120 (hereinafter referred as network 120).

The Al based evaluation system 102 may be communicatively coupled to the server 114, and the external devices 118, via the network 120. Further, the Al basedevaluation system 102 may be communicatively coupled to the database 116 of the server 114, via the network 120. A user or an administrator (not shown in the FIG.1) mayinteract with the Al based evaluation system 102 via the user interface 110 of the I/O device 108.
The Al based evaluation system 102 may include suitable logic, circuitry, interfaces, and / or code that may be configured to evaluate performance of developers of an organization, based on a plurality of performance parameters associated with the developers. Such developers may be from a same team or a different team in the organization and working at different levels of a hierarchy in the organization. The plurality of performance parameters may include, but not limited to, at least one of efficiency of a developed product associated with a module developed for a product, complexity of the developed product, types of sut received from peers, feedback or rating received from managers, quality of the module developed for the product, and technical skills of each of the set of developers.

Examples of the Al based evaluation system 102 may include, but are notlimited to, a server, a desktop, a laptop, a notebook, a tablet, a smartphone, a mobile phone, an application server, or the like. By way of an example, the Al based evaluationsystem 102 may be implemented as a plurality of distributed cloud-based resources by use of several technologies that are well known to those skilled in the art. Other examplesof implementation of the Al based evaluation system 102 may include, but are not limited to, a web/cloud server and a media server,

The I/O device 108 may be configured to provide inputs to the Al based evaluation system 102 and render output on user equipment. By way of an example, theuser may provide inputs, i.e., the plurality of performance parameters via the I/O device 108. In addition, the I/O device 108 may be configured to provide ranks to the developers based on performance evaluation of the developers by the Al based evaluation system 102. Further, the I/O device 108 may be configured to display results (i.e., the set of performance category associated with each of the set of developers) based on the evaluation performed by the Al based evaluation system 102, to the user. By way of another example, the user interface 110 may be configured to provide inputs from users to the Al based evaluation system 102. Thus, for example, in some embodiment, the Al based evaluation system 102 may ingest the one or more performance parameters via the user interface 110. Further, for example, in some embodiments, the Al based evaluation device 102 may render intermediate results (e.g., one or more feature vectors created for each of the set of developers, the set of performance categories, and one ormore features determined for each of the plurality of performance parameters) or final results (e.g., classification of each of the set of developers in one of the set of performance categories, and results of evaluation of each of the set of set of developers) to the user(s) via the user interface 110.

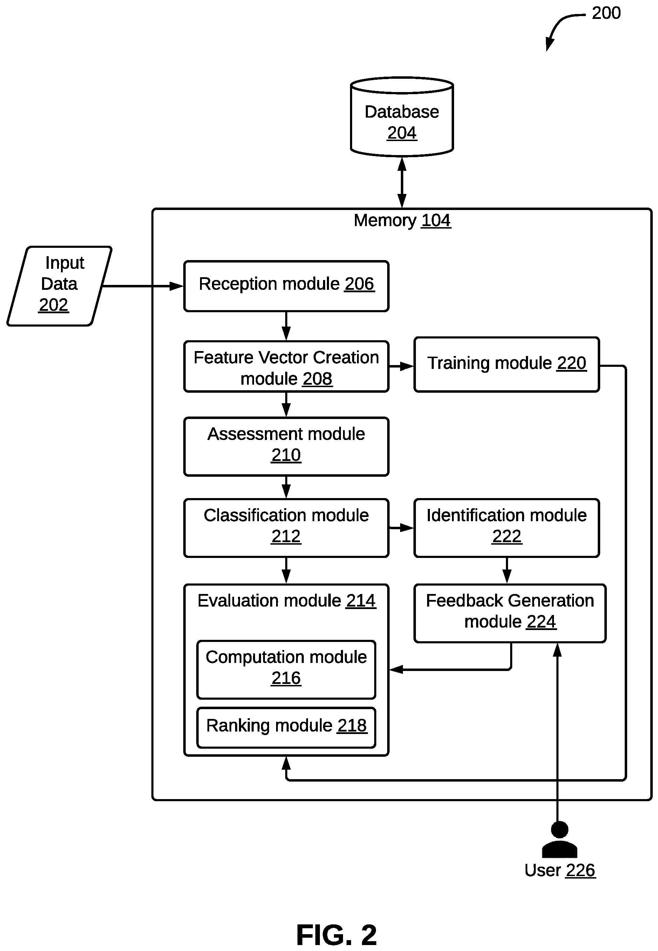

The memory 104 may store instructions that, when executed by the processor 106, may cause the processor 106 to evaluate performance of each of the setof developers. The processor 106 may evaluate the performance of each of the set of developers based on a plurality of performance parameters associated with the set of developers, in accordance with some embodiments. As will be described in greater detail in conjunction with FIG. 2 to FIG. 9, in order to evaluate the performance of each of the set of developers, the processor 106 in conjunction with the memory 104 may perform various functions including creation of one or more feature vectors, assessment of the one or more feature vectors, classification of the set of developers, and evaluation of the set of developers. The memory 104 also store various data (e.g., the plurality of performance categories, the one or more feature vectors, ranks for each developer from the set of developers, and a predefined evaluation, etc.) that may be captured, processed, and/or required by the Al based evaluation system 102. The memory 104 may be a non-volatile memory (e.g., flash memory, Read Only Memory (ROM), Programmable ROM (PROM),Erasable PROM (EPROM), Electrically EPROM (EEPROM) memory, etc.) or a volatile memory (e.g., Dynamic Random-Access Memory (DRAM), Static Random-Access memory (SRAM), etc.).

In accordance with an embodiment, the Al based evaluation system 102 may be configured to deploy the ML model 1 12 to use output of the ML model to generate real or near-real time inferences, take decisions, or output prediction results. The ML model 112 may be deployed on the Al based evaluation system 102 once the ML model 112 is trained on the Al based evaluation system 102 for classification task associated with evaluation of performance of developers.
In accordance with one embodiment, the machine learning model 112 may correspond to a first pre-trained machine learning model. In accordance with an embodiment, the first pre-trained machine learning model may correspond to an attention based deep neural network model that classifies a developer into a particular category of evaluation. Examples of the attention based deep neural network model includes, but not limited to, Long Short-Term Memory (LSTM), LSTM - GRU (Long Short-Term Memory - Gated Recurrent Units) of Neural Network. The machine learning model 112 may be configured to determine one or more features for each of the plurality of performance parameters. The machine learning model 112 may be configured to determine one or more features in order to assist the Al based evaluation system 102 tocreate the one or more feature vectors. In accordance with another embodiment, the machine learning model 112 may correspond to a second machine learning model. The machine learning model 112 may be trained by assigning weights to the one or more features associated with the each of the plurality of performance parameters based on apredefined evaluation criterion. The predefined evaluation criterion may include one or more of a technical skill in demand and an efficiency of a developed product with respect to bugs identified in the developed product.

Further, the Al based evaluation system 102 may interact with the server 114 or the external device 118 over the network 120 for sending and receiving various types of data. The external device 118 may include, but not limited to, a desktop, a laptop,a notebook, a netbook, a tablet, a smartphone, a remote server, a mobile phone, or another computing system/device.

The network 120, for example, may be any wired or wireless communication network and the examples may include, but not limited to, the Internet, Wireless Local Area Network (WLAN), Wi-Fi, Long Term Evolution (LTE), Worldwide Interoperability for Microwave Access (WiMAX), and General Packet Radio Service (GPRS). In some embodiments, the Al based evaluation system 102 may fetch information associated with the developers from the server 114, via the network 120. Thedatabase 116 may store information associated with existing technologies or the new technology in demand.

In operation, the Al based evaluation system 102 may be configured to receive the plurality of performance parameters associated with a set of developers. The AI based evaluation system 102 may be further configured to create one or more feature vectors corresponding to each of the plurality of performance parameters. The Al based evaluation system 102 may create one or more feature vectors based on one or more features determined for each of the plurality of performance parameters. Further, the Al based evaluation system 102 may assess the one or more feature vectors. The Al based evaluation system 102 may then classify each of the set of developers into one of a set of performance categories. In accordance with an embodiment, the set of performance categories may include an excellent performer category, a good performer category, an average performer category, and a bad performer category. Thereafter, the Al based evaluation system 102 may evaluate the performance of at least one of the set of developers, based on an associated category in the set of performance categories. In order to evaluate the performance, the Al based evaluation system 102 may compute ranks for each developer from the set of developers categorized within an associated performance category. Based on the computed ranks, the Al based evaluation system 102 may rank each developer from the set of developers associated with each of the set of performance categories. In addition, the Al based evaluation system 102 may generate a feedback for each of the set of developers. The Al based evaluation system 102 may generate the feedback based on a plurality of bugs identified for a module of a product developed by each of the set of developers. The Al based evaluation system 102 may then evaluate performance of each of the set of developers based on the generated feedback. This is further explained in detail in conjunction with FIG. 2 to FIG. 9.

Referring now to FIG. 2, a functional block diagram of various modules within a memory of an Al based evaluation system for evaluating performance of developers is illustrated, in accordance with an embodiment of the present disclosure. FIG. 2 is explained in conjunction with FIG. 1.

With reference to FIG. 2, there is shown input data 202, a database 204, the memory 102 that includes a reception module 206, a feature vector creation module208, an assessment module 210, a classification module 212, an evaluation module 214,a training module 220, an identification module 222, and a feedback generation module 224. The feedback generation module 224 may receive a feedback from a user 226. The user 226 may correspond to, a manager, a reviewer, a supervisor or a developer. In addition, the user 226 may be working in a same team as of the set of developers or maybe working in any other team of the organization. The evaluation module 214 may further include a computing module 216, and a ranking module 216. In accordance with an embodiment, the memory 102 may include the database 204. The modules 206-224 mayinclude routines, programs, objects, components, data structures, etc., which perform particular tasks or implement particular abstract data types. The modules 206-224 described herein may be implemented as software modules that may be executed in a cloud-based computing environment of the Al based evaluation system 102.

In accordance with an embodiment, the memory 104 may be configured toreceive the input data 202. The input data 202 may correspond to data associated with a plurality of performance parameters of a set of developers. In an embodiment, the plurality of performance parameters may include, but is not limited to, at least one of efficiency of a developed product associated with a module developed for a product, complexity of the developed product, types of support received from peers, feedback orrating received from managers, quality of the module developed for the product, and technical skills of each of the set of developers. The memory 104 may be configured to receive the input data 202 in the database 204 from the external device 118. Additionally, the input data may include information associated with the set of developers.

The database 204 may serve as a repository for storing data processed, received, and generated by the modules 206-224. The data generated as a result of the execution of the modules 206-224 may be stored in the database 204.

During operation, the reception module 206 may be configured to receive the plurality of performance parameters associated with each of the set of developers asthe input data 202. The plurality of performance parameters may include, but is not limited to, at least one of efficiency of a developed product associated with a module developed for a product, complexity of the developed product, types of support received from peers, feedback or rating received from managers, quality of the module developed for the product, and technical skills of each of the set of developers. In accordance with an embodiment, complexity of the developed product may correspond to complexity in code snippets of the developed product. The efficiency of the developed product associated with the module developed for the product may be based on faulty codes or bug free codes associated with the developer. For example, the Al based evaluation system 102 captures performance parameters for a developer who works on multiple modules of a single product, multiple products or an application in various programming languages ortechnologies and may evaluate the performance of the developer, which is an ardent taskwhen done manually. In accordance with an embodiment, the Al based evaluation system 102 may be configured to use the performance parameter corresponding to the technical skills of developers to identify developers of similar skill set.

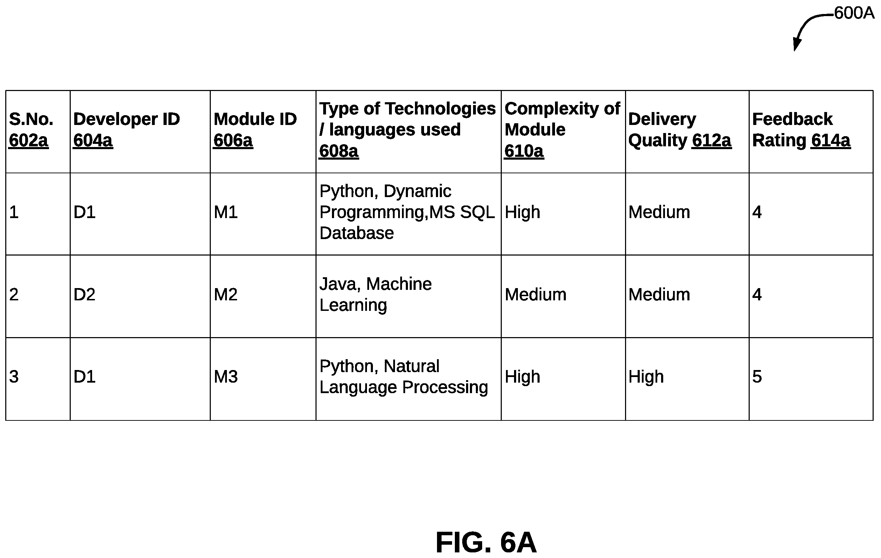

The plurality of performance parameters may correspond to tabular data shown in FIG. 6A. Such tabular data corresponding to the plurality of performance parameters may reflect ordinal values of the plurality of performance parameters. The reception module 206 may be configured to pre-process the input data 202 of the pluralityof performance parameters with ordinal values into numerical values. For example, the performance parameter corresponding to complexity of developed product may be high, medium and low value which is converted to 1, 2 and 3 respectively by the reception module 206. Further, in another example, feedback or rating received from managers may take any values between 1 to 5. '1' may represent lowest rating received from managers, while '5' may represent highest rating received from managers. The rating may be provided by managers based on quality of delivery of the module of the product.Moreover, in some embodiments, definition of lowest and highest may be different. In accordance with an embodiment, the input data 202 of the plurality of performance parameters with ordinal values may be converted into a passable format for a first pre-trained machine learning model by using one hot representation for the input data 202. The one hot representation (also known as one hot embedding) may map input data 202 which may be a categorical value data into a Neural Network passable format. Such format may allow to train an embedding layer of the first pre-trained machine learning model for each of the plurality of performance parameters. The one hot representation may represent a low dimensional embedding which on being fed to hidden layers of thefirst pre-trained machine learning model can handle a much smaller size of preprocessedinput data as compared to the input data with ordinal values.

Further, the feature vector creation module 208 may be configured to determine one or more features for each of the plurality of performance parameters corresponding to the pre-processed input data. In accordance with an embodiment, the feature vector creation module 208 may be configured to determine one or more featuresbased on the first pre-trained machine learning model. As will be appreciated, the first pre-trained machine learning model may correspond to any deep neural network model (for example, an attention based deep neural network model and a Convolution Neural Network (CNN) model).

In accordance with an embodiment, the feature vector creation module 208 may be further configured to create one or more feature vectors corresponding to the determined one or more features. In accordance with another embodiment, the feature vector creation module 208 may be configured to create one or more feature vectors based on the first pre-trained machine learning model. The feature vectors created for each of the plurality of performance parameters may be stored in the database 204 for further computation. It may be noted that the process of storing the feature vectors in the database 204 may continue, until the feature vector corresponding to each of the plurality of performance parameters is created and stored. The feature vector stored in the database 204 may further be utilized by the assessment module 210.

In addition, the feature vector creation module 208 may be configured to send the one or more feature vectors to the training module 220. The assessment module210 may be configured to receive each of the one or more feature vectors from the feature vector creation module 208. Upon receiving the one or more feature vectors, the assessment module 210 may be configured to perform assessment of each of the one or more feature vectors. In an embodiment, the assessment module 210 may perform assessment based on the first pre-trained machine learning model. Further, the assessment module may be configured to send a result of assessment of each of the one or more feature vector to the classification module 212.

The classification module 212 may be configured to receive the result of assessment of each of the one or more feature vectors from the assessment module 210. The classification module 212 may be configured to classify each of the set of developers into one of a set of performance categories, based on the assessment of each of the one or more feature vectors. The performance categories may include an excellent performer, a good performer, an average performer and a bad performer. In accordance with an embodiment, the classification module 212 may classify the set of developers into one of the excellent performer, the good performer, the average performer and the bad performer, based on the assessing of the one or more feature vectors. Further, the classification module 212 may be configured to send a result of classification of the set of developers to the evaluation module 214. In addition, the classification module 212 may be configured to send the result of classification to the identification module 222.

The evaluation module 214 may be configured to receive the result of classification from the classification module 212. In addition, the evaluation module 214 may be configured to receive input from the training module 220. In an embodiment, thetraining module 220 may correspond to a machine learning model (such as, the secondmachine learning model). As will be appreciated, the second pre-trained machine learning model may correspond to any deep neural network model (for example, an attention based deep neural network model and a Convolution Neural Network (CNN) model). The second machine learning model may be trained by assigning weights to theone or more features associated with the each of the plurality of performance parametersbased on a predefined evaluation criterion. The predefined evaluation criteria may include one or more of a technical skill in demand and an efficiency of a developed product with respect to bugs identified in the developed product.

Further, the evaluation module 214 may be configured to evaluate the performance of at least one of the set of developers. The evaluation module 214 may evaluate the performance of at least one of the set of developers based on an associated category in the set of performance categories, in response to the classification. In accordance with an embodiment, output data corresponding to the evaluation of the performance of at least one of the set of developers may be rendered on a user device.Such output data may facilitate identification of employees in need of training on a particular technology. Further, the output data may provide insights for collaboration amongst employees of an organization.

In order to evaluate performance of at least one of the set of developers, the computing module 216 within the evaluation module 214 may be configured to compute ranks for each developer from the set of developers categorized within an associated performance category for each of the set of performance categories. In an embodiment, the computing module 216 may compute ranks based on the second machine learning model. In accordance with an embodiment, the second machine learning model correspond to any rank based neural network model (for example, Ranknet). By way of an example, the computing module 216 may compute ranks for each developer from the set of developers based on the predefined evaluation criteria.

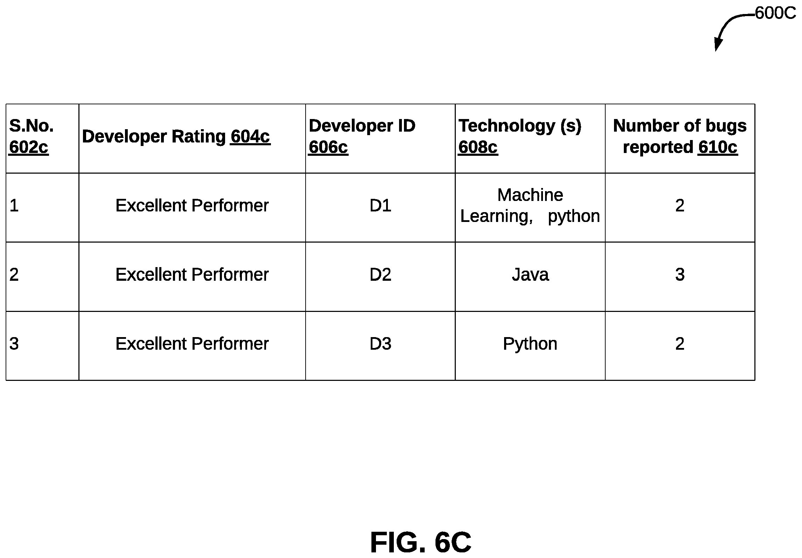

In accordance with an embodiment, high weights are assigned to one or more features associated with at least one of the high demand technical skill as compared to a low demand technical skill and bug-free developed product as compared to the developed product with a plurality of bugs, by using the second machine learning model. In accordance with an exemplary embodiment, the computing module 216 may be configured to compute re-rank of developers under a same category (say, an "Excellent Performer" category). For example, it may be possible that there exist two developers under the "Excellent Performer" category, however, the two developers may be compared for evaluation of performance on basis of bugs or no-bugs reported in their respective developed modules. In accordance with another exemplary embodiment, some of the developers may be skilled on latest technologies, such as, MachineLearning, Artificial Intelligence, and Natural Language Processing. The developers delivering solutions in the latest technologies may be given more attention as compared to their counterpart developers. This is explained in detail in conjunction with FIG. 6C. Once the computing module 216 computes ranks for each developer from the set of developers, the computing module 216 may send the computed ranks to the ranking module 218.

The ranking module 218 within the evaluation module 214 may be configured to receive the computed rank for each developer from the set of developers from the computing module 216. Further, the ranking module 218 may rank each developer from the set of developers for each of the set of performance categories, basedon the computed ranks. In an embodiment, the ranking module 218 may provide ranks for each developer in order to evaluate performance of each developer from the set of developers.

The training module 220 may be configured to receive the one or more feature vectors from the feature vector creation module 208. Based on the one or more feature vectors received, the training module 220 may train the second machine learning model. In an embodiment, the training module 220 may train the second the machine learning model by assigning weights to the one or more features associated with the each of the plurality of performance parameters based on the predefined evaluation criterion. In accordance with an embodiment, the training module 220 may be configured to train the first pre-trained machine learning model.

The identification module 222 may be configured to receive the result of classification from the classification module 212. Further, the identification module 222 may be configured to identify a plurality of bugs associated with a module of a product developed by each of the set of developers. In addition, the identification module 222 may be configured to send the plurality of bugs identified to the feedback generation module 224.

The feedback generation module 224 may be configured to generate a feedback for each of the set of developers, based on the identified plurality of bugs. In an embodiment, the feedback generation module 224 may generate the feedback in response of identifying the plurality of bugs associated with the product developed by each of the set of developers. Moreover, the feedback generation module 224 may receive a feedback from the user 226. The user 226 may correspond to a manager, a reviewer, a supervisor, or a developer. In addition, the user 226 may be working in the same team as of the set of developers or may be working in any other team of the organization. Thereafter, the feedback generation module 224 may be configured to send the generated feedback to the evaluation module 214. In an embodiment, the feedback generation module 224 may send the generated feedback to the evaluation module 214 in order to evaluate the performance of at least one of the set of developers.

In particular, as will be appreciated by those of ordinary skill in the art, various modules 206-224 for performing the techniques and steps described herein may be implemented in the Al based evaluation system 102, either by hardware, software, orcombinations of hardware and software. For example, suitable code may be accessed and executed by the one or more processors on the Al based evaluation system 102 to perform some or all of the techniques described herein. Similarly, application specific integrated circuits (ASICs) configured to perform some or all of the processes describedherein may be included in the one or more processors on the host computing system. Even though FIGs 1-2 describe about the Al based evaluation system 102 and 200, the functionality of the components of the Al based evaluation system 102 and 200 may be implemented in any computing devices.

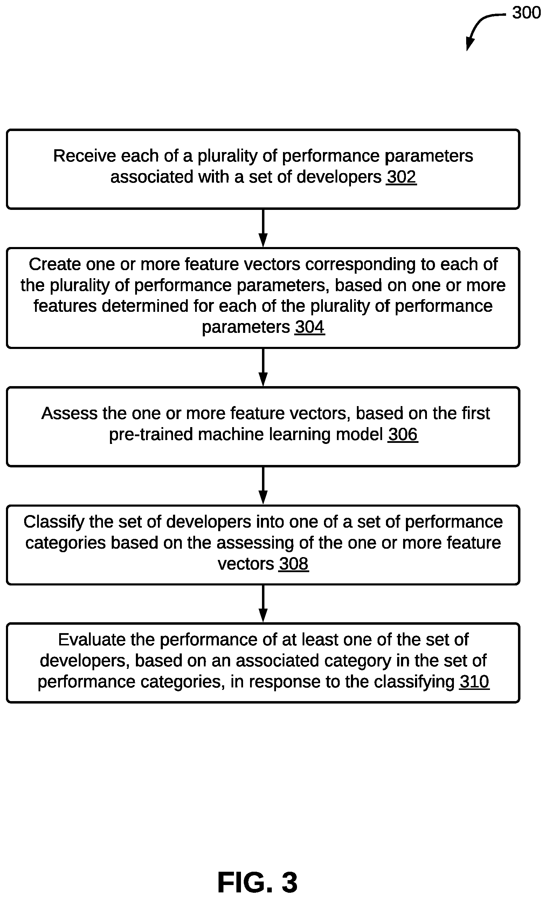

Referring to FIG. 3, a flowchart of a method for evaluating performance of developers using Al is illustrated, in accordance with an embodiment. FIG. 3 is explained in conjunction with FIG. 1 and FIG. 2.

With reference to FIG. 1, the performance of developers may be evaluated based on various entities of network environment 100 (for example, the Al based evaluation system 102, and the server 114). Moreover, various modules depicted withinthe memory 104 of the Al based evaluation system 102 in FIG. 2, may be configured to perform each of the steps mentioned in the present FIG. 3.

At step 302, a plurality of performance parameters may be received. Eachof the plurality of performance parameters received may be associated with the set of developers. In an embodiment, each of the performance parameters may include, but is not limited, to at least one of efficiency of a developed product associated with a module developed for a product, complexity of the developed product, types of support receivedfrom peers, feedback or rating received from managers, quality of the module developed for the product, and technical skills of each of the set of developers.

At step 304, one or more feature vectors may be created, corresponding toeach of the plurality of performance parameters. Moreover, the one or more feature vectors may be created based on one or more features determined for each of the plurality of performance parameters. In an embodiment, the one or more feature vectorsmay be created based on a first pre-trained machine learning model.

With reference to FIG. 1, the proposed Al based evaluation system 102 may be order agnostic and need not depend on specific order of values being implemented. At step 306, each of the one or more feature vectors may be assessed based on the first pre-trained machine learning model.

At step 308, each of the set of developers may be classified into one of a set of performance categories. In an embodiment, the set of performance categories may include an excellent performer category, a good performer category, an average performer category, and a bad performer category. By way of an example, the excellent performer category refers to a group of developers that may have received top rating during evaluation of performance. Further, the bad performer may refer to a group of developers that may have received lowest rating during evaluation of performance. In an embodiment, in order to classify each of the set of developers in at least one of the set of performance category, the classification may be based on a deep learning recurrent neural network. Example of the deep learning model may include a Long Short-Term Memory (LSTM) model and Long Short-Term Memory - Gated Recurrent Units (LSTM-GRU).

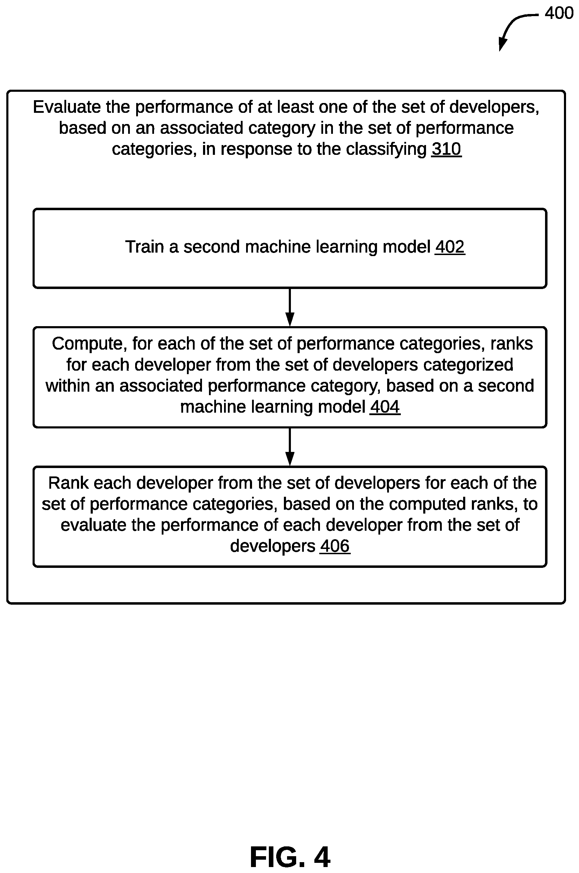

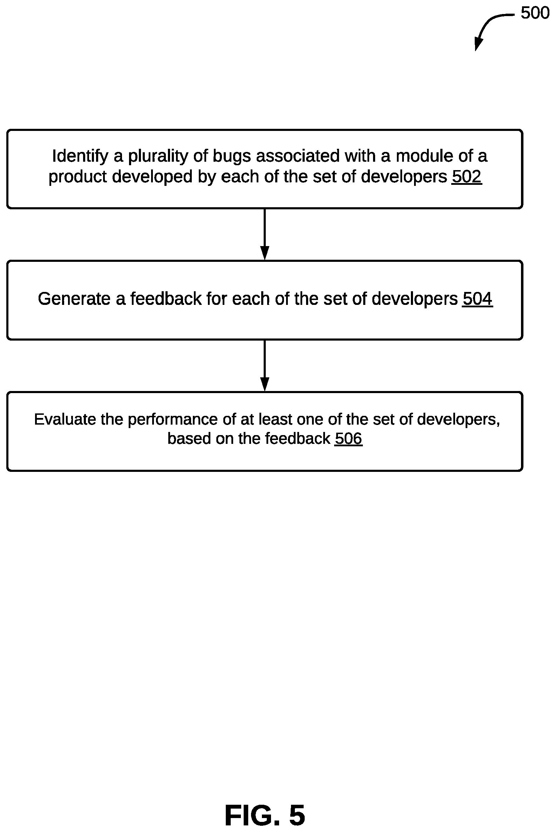

At step 310, the performance of at least one of the set of developers may be evaluated. In an embodiment, the performance of at least one developer may be evaluated based on an associated category with the set of performance categories, in response to the classification. The process of evaluating the performance of at least one developer from the set of developers has been explained in greater detail in conjunctionto FIG. 4 and FIG. 5.

Referring now to FIG. 4, a flowchart of a method for ranking developers for performance evaluation of the developers is illustrated, in accordance with an embodiment, in accordance with an embodiment. FIG. 4 is explained in conjunction withFIG. 1 to FIG. 3.

With reference to FIG. 3, in order to evaluate the performance of at least one of the set developers as mentioned in step 310, a second machine learning model may be trained. The second machine learning model may correspond to the machine learning model 112. In an embodiment, in order to train the second machine learning model, weights may be assigned to the one or more features associated with the each of the plurality of performance parameters. Moreover, weights to the one or more featuresmay be assigned based on a predefined evaluation criterion. The predefined evaluationcriteria may include, but is not limited to, one or more of a technical skill in demand and an efficiency of a developed product with respect to bugs identified in the developed product. Examples of the technical skill may include, but is not limited to, Java, Python, AI, dynamic programming, Natural Processing Language (NLP), Machine Learning (ML),and Structured Query Language (SQL) database. In an embodiment, high weights may be assigned to one or more features associated with at least one of the high demand technical skill as compared to a low demand technical skill. In addition, higher weights may be assigned to a bug-free developed product as compared to the developed productwith a plurality of bugs.

At step 404, ranks for each developer may be computed, based on the trained second machine learning model. Moreover, ranks may be computed for each developer from the set of developers categorized within an associated performance category. In addition, ranks for each developer may be computed for each of the set of performance categories.

At step 406, each developer from the set of developers for each of the set of performance categories may be ranked based on the computed ranks for each developer. Moreover, each developer may be ranked based on the computed ranks in order to evaluate the performance of each developer from the set of developers.

Referring now to FIG. 5, a flowchart of a method of generating a feedback for evaluating the performance of at least one developer is illustrated, in accordance with an embodiment. FIG. 5 is explained in conjunction with FIG. 1 to FIG. 4.

At step 502, a plurality of bugs may be identified. In accordance with an embodiment, the plurality of bugs identified may be associated with a module of a product developed by each of the set of developers. Moreover, the plurality of bugs identified may be reported to each of the set of developer and his particular manager to take appropriateactions in order to solve a bug identified.

At step 504, Once the plurality of bugs is identified, a feedback may be generated for each of the set of developers. In an embodiment, the feedback may be generated in response of identification of the plurality of bugs associated with the productdeveloped by each of the set of developers. By way of an example, based on the feedback, when the plurality of bugs may have been reported for same developer very frequently then a negative response may be imposed for the developer, thereby effecting rating of the developer while evaluating the performance

At step 506, the performance of at least one of the set of developers may be evaluated. By way of an example, in order to evaluate at least one developer, the at least one developer may be re-ranked based on the feedback generated corresponding to the plurality of bugs identified. In an embodiment, a neural network-based ranking method may re-rank each of the set of developers under at least one of the set of performance category. By way of an example, the neural network used for ranking may correspond to Ranknet. For example, multiple developers from the set of developers may be ranked under the "excellent performer" category. However, based on a number of the plurality of bugs identified in the module of the product by each from the set of developers ranked under the excellent performer category, each developer from the set of developers may be re-ranked. This has been explained in greater detail in conjunction to FIG. 6A to 6B.

Referring now to FIG. 6A - 6B, a tabular representation of input data corresponding to the plurality of performance parameters is illustrated, in accordance with some exemplary embodiments of the present disclosure. FIG. 6A - 6B is explainedin conjunction with FIG. 1 to FIG. 5.

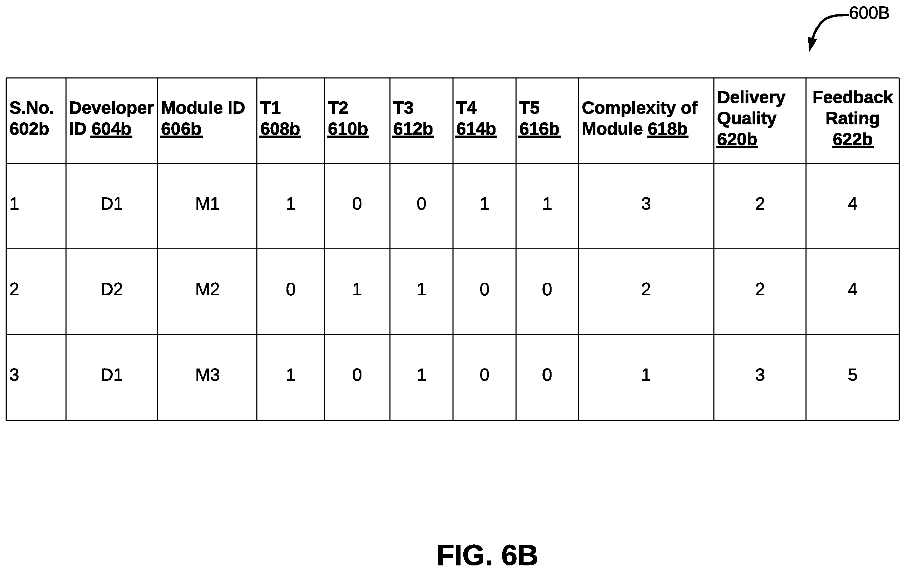

With reference to FIG. 6A, the tabular representation 600A of a dataset (the input data) corresponding to the plurality of performance parameters for a set of developers is shown. The dataset may depict the plurality of performance parameters captured as the input data by the Al based evaluation system 102 for each of the set of developers order to evaluate performance of each of the set of developers. A column 602a represents a serial number. A column 604a represents a developer ID for each of the set of developers. In present table 600, the set of developers may correspond to a set of three developers. A column 606a represents a module ID of the product developedby each of the set of developers. A column 608a represents a type of technology or language used to develop the module of the product. A column 610a represents a complexity of the module developed. A column 612a represents a quality of the module developed. A column 614a represents a feedback rating provided by managers to each of the set of developers based on the quality of the module developed. The data populated in the table 600A may not be suitable as a passable format for a neural network, such as the first pre-trained machine learning model. Hence, the data populated in the table 600A may be pre-processed by the Al based evaluation system 102 as shown in FIG. 6B.

The tabular representation 600B may represent numerical values of the plurality of performance parameters captured for each of the set of developers. The Al based evaluation system 102 may be configured to convert input data with ordinal valuesas shown in FIG. 6A into numerical values. As an example, column with name "delivery quality" have values such as 1, 2 and 3 where "1" may replace "Low" and "3" may replace"High". In some other embodiments, one-hot representation (also referred as one hot embeddings) of ordinal values may be generated by the Al based evaluation system 102where new features / columns may be introduced equal to number of unique values in original column of tabular representation 600A. For example, columns of performance parameters with multiple values (such as, Column: Technology used where single developer skilled in multiple technologies) may be converted to unique numeric values.
In order to represent values numerically for the performance parameters, the Al based evaluation system 102 may be configured to convert such values into one-hot representation.

Further, in n-hot representation, embedding layer of the first trained Machine Learning model may have vector representation for a number of dimensions equal to number of unique values (T1 to T5 of 600B) in certain column (such as, the column 608a of 600A. Column 'T1', 'T2', 'T3', 'T4', and 'T5' may represent unique numerical values based on the type of technology or language used in order to develop the module of the product. ). By way of an example, the performance parameter "types of technology/ language used" in column 608a may be represented numerically in T1 toT5 of 600B, such as, Python: [1 0 0 0 0 0], Java: [0 1 0 0 0 0], Machine Learning: [0 0 1 0 0 0], Natural Language Processing: [0 0 0 1 0 0], MS SQL database: [0 0 0 0 1 0] and Dynamic Programming: [0 0 0 0 0 1].

FIG. 6C illustrates a tabular representation for identifying a plurality of bugs associated with a module of a product developed to evaluate performance of developers,in accordance with an embodiment.

A tabular representation 600C represents the plurality of bugs identified corresponding to each of the set of developers. A column 602c may represent a serial number. A column 604c may represent developers rating. The developers rating may be based on classification of each of the set of developers in one of the set of performance. A column 606c may represent developer ID. A column 608c may represent type of technology or language used to develop the module of the product. Lastly, a column 608cmay represent a number of bugs identified in the module of the product developed by each of the set of developers. Moreover, each developer represented in the tabular representation 600C may be initially classified in the excellent performance category. However, the number of bugs identified in the module developed by each developer is different. Therefore, each developer classified under the excellent performance category may be re-ranked.

By way of an example, in 600C, maximum number of bugs, i.e., '3' have been identified for a developer with developer ID 'D2'. Therefore, the developer with developer ID 'D2' may be ranked lowest. In addition, number of bugs identified for a developer with developer ID 'D1' and a developer with developer ID 'D3' is '2'. However, the developer with developer ID 'D1' may be ranked higher than the developer with developer ID 'D3' because the developer with developer ID 'D1' has worked on more technologies as compared to the developer with developer ID 'D3'.

The Al based evaluation system 102 may be configured to rank each developer from the set of developers for each of the set of performance categories to evaluate the performance of each developer from the set of developers using the second pre-trained machine learning model. The Al based evaluation system 102 may be configured to render output data on a user device (not shown) based on evaluation of theperformance of at least one of the set of developers. Such output data may be used by some other developer or manager looking for assistance from another developer in order to assist developer or managers to resolve bugs in future. In certain scenario, one developer may be of different team in the same organization and can use the output datato find a developer of specific domain/technical skillset.

In certain other scenario, a developer or a manager who needs help or assistance from another developer may leverage the Al based evaluation system 102. By way of an example, the developer or the manager may ask query like "Can you help me to find out developer who is an expert in machine learning?" via the user interface 110 of the Al based evaluation system 102. As a response, the Al based evaluation system 102 may connect the developer or the manager via REST API (RepresentationalState Transfer Application Programming Interface) to get details of developers and render/display the response using the I/O devices 108.

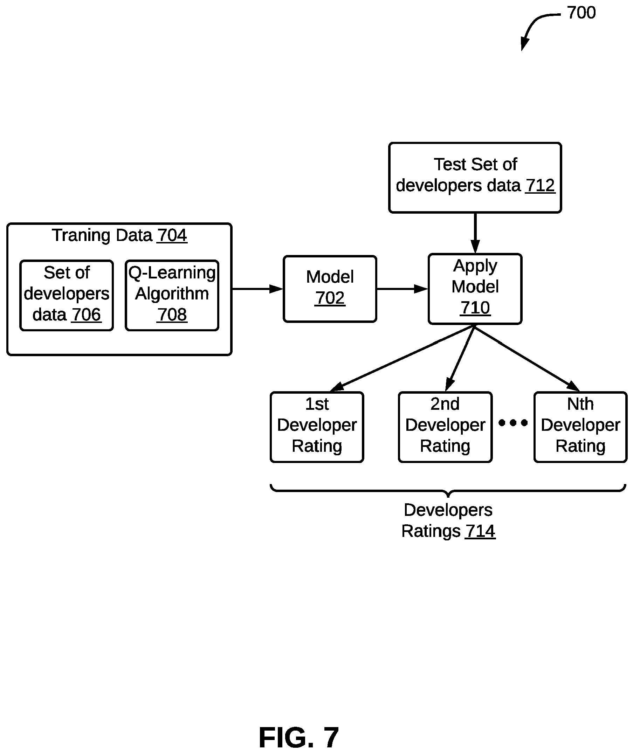

Referring now to FIG. 7, a trained Al based evaluation system based on areinforcement learning is illustrated, in accordance with an exemplary embodiment. FIG.7 is explained in conjunction with FIG. 1 to FIG. 6C.

There is shown a model 702, training data 704 with a set of developer data706 and Q-learning algorithm 708, apply model 710, a test set of developer data 712, and developer ratings 714. In accordance with an embodiment, the model 702 may correspond to a trained evaluation system, such as the Al based evaluation system 102.In accordance with an embodiment, the model 702 may be exposed to new training data 704 when the model 702 has never been through earlier training process. The model 702 may leverage Al based code reusability system to generate code snippets in various languages and technologies. The code snippets may be generated for modules of dummy products similar to the ones developed by developers. Thereafter, a set of bugs may be introduced in some of the modules of the dummy products to generate information associated with each of the set of developers, and to capture feedback given by a manager.

As a result, the model 702 may learn to identify optimal reward function that will maximize reward for end goal of performance evaluation. In accordance with an embodiment, the set of developer data 706 may correspond to information associated with each of the set of developers. The information may include performance category associated with each of the set of developers, computed ranks, the plurality of performance parameters, etc. Further, the Q-value algorithm 708 may be used to calculate a Q-value corresponding to each of the set of developers. The Q-value may be calculated based on the reinforcement learning approach. In addition, the feedback associated with each of the set of developers may be predicted based on reinforcement learning approach.

In an embodiment, the Q-value represents preference of a particular developer over other developers from the set of developers across all values of the feedback or rating. In other words, the Q-value may represent probability of one developer being preferred over the other developer across different values of the feedback or rating. Based on the calculated Q-value, the model 702 may penalize the manager for giving incorrect feedback or rating to one developer over the other developers from the set of developers. Moreover, the Q-values each of the set of developers along with the associated feedback or rating may be used to maximize reward.

Based on the training data received, the model 710 may be generated for a test set of developers' data 712. The test set of developers' data may correspond to information associated with a new set of developers. The rating provided to each of the test set of developers' data may be depicted as developers rating 714. With reference tothe FIG. 1, the first pre-trained machine learning model corresponds to a Q network. TheQ network may be configured to receive as input an input observation corresponding to set of developers' data and an input action and to generate an estimated future reward (or penalty) from the input in accordance with each of the plurality of performance parameters associated with the set of developers.

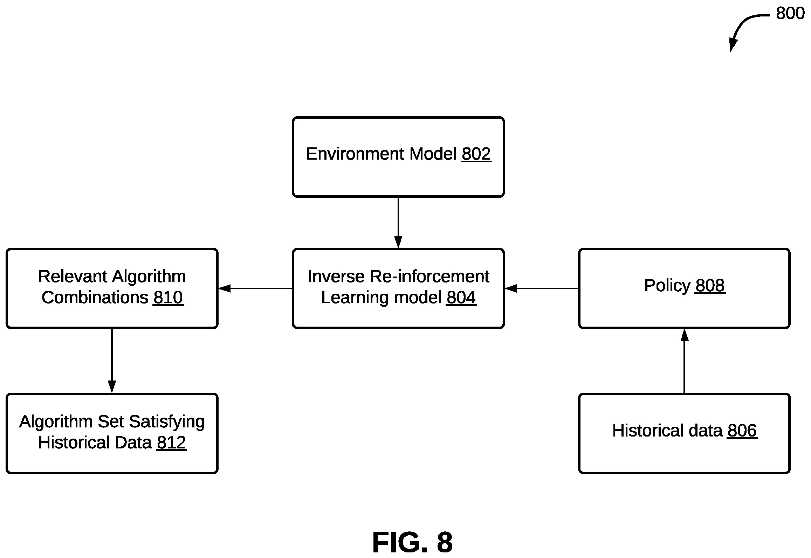

Referring now to FIG. 8, a trained evaluation system that uses inverse reinforcement learning is illustrated, in accordance with an exemplary embodiment. FIG.8 is explained in conjunction with FIG. 1 to FIG. 7. There is shown an environmental model 802, an inverse reinforcement learning model 804, historical data 806, policy 808, relevant algorithm combinations 810, and algorithm set satisfying historical data 812.

The reinforcement learning based trained evaluation system may correspond to the environment model 802. The environment model 802 may correspondto the apply model 710. The environment model 802 may employ the inverse reinforcement learning model 804. The inverse reinforcement learning model 804 may be configured to utilize the historical records 806 to penalize and boost rating and rankingof each of a set of developers in an organization. The historical records 806 may use various policies, such as policy 808 to penalize and boost rating and ranking of each of the set of developers.

In an embodiment, the historical records 806 may contain detailed information about each of the set of developers from various teams in an organization along with the plurality of bugs reported and action taken by each of the set of developers and the manager with any other member in same team or different team. Thereafter, the inverse reinforcement learning model 804 may identify combination or set of algorithms and function that will define architecture of deep learning based recurrent neural network variations and define hyperparameter for different layers of a neural network. The combination or set of algorithms and function may be represented as relevant algorithm combination 810. In an embodiment, the inverse reinforcement learning model 804 mayrecommend more than one combination of set of algorithms and functions.

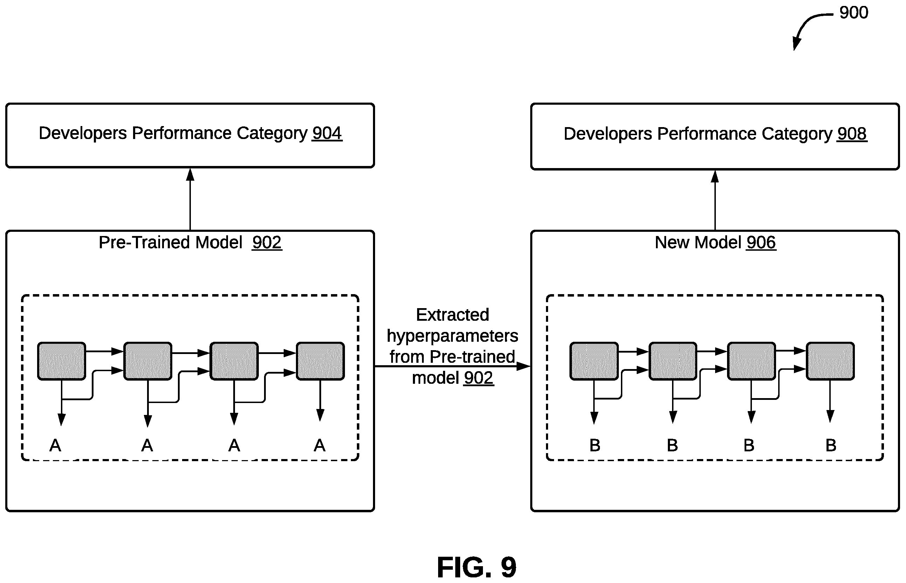

Further, the recommended combination of set of algorithms and functions may be evaluated based on the reinforcement learning approach in order to accept onecombination of set of algorithms and functions. Moreover, one combination of set of algorithms and functions may be accepted when it satisfies evaluation of historical records represented as algorithm set satisfying historical records 812. Once the one combination of set of algorithms and functions is accepted, a new environment may be created for the environment model 802. In addition, the inverse reinforcement learning model 804 may recommend optimal values of hyperparameters corresponding to each combination of set of algorithms and functions. Further, the optimal values of hyperparameters may be validated against historical data received from an existing environment of the environment model 802. This process is known as model hyperparameter tuning.
Referring now to FIG. 9, a transfer learning approach to create a new environment for an evaluation system is depicted, in accordance with an exemplary embodiment. FIG. 9 is explained in conjunction with FIG. 1 to FIG. 8. There is shown a pre-trained model 902, a developer performance category 904 associated with the pre- trained model 902, a new model 906, and a developer performance category 908 associated with the pre-trained model 906.

In an embodiment, the transfer learning approach may be used to leveragetraining of an Al based evaluation system (such as, the Al based evaluation system 102) from previous implementation to new implementation. The new model 906 may correspond to the new environment generated for the environment model 802 based on acceptance of one combination of the set of algorithms and functions. The new model 906 may receive the optimal values of hyperparameters represented as extracted pre- trained hyperparameters from the pre-trained model 902.

Thereafter, the new model 906 may classify a new set of developers in one of the set of performance categories based on the optimal values of hyperparameters received from the pre-trained model 902. In an embodiment, the transfer learning approach may enable gathering of knowledge from an existing environment or implementation of the Al based evaluation system 102. The knowledge corresponds to optimal values (i.e., the one or more feature vectors) of the plurality of performance parameters and hyperparameter required for the implementation of the Al based evaluation system 102. Further, the optimal values of the plurality of performance parameters and hyperparameter may be utilized to develop the new environment for theAl based evaluation system 102. This may require less training time as compared to starting from scratch or from vanilla model. The vanilla model may correspond to a standard, usual, and unfeatured version of the Al based evaluation system 102.

In accordance with an embodiment, the Al based evaluation system 102 may be configured to modify the first pre-trained machine learning model (such as, the pre-trained model 902) with transferable knowledge for a target system to be evaluated.The transferable knowledge may correspond to optimal values associated with the one or more feature vectors corresponding to each of the plurality of performance parameters.

In accordance with an embodiment, the Al based evaluation system 102 may be configured to tune the first pre-trained machine learning model (such as, the pre-trained model 902) using specific characteristics of the target system to create a target model (such as, the new model 906). In accordance with an embodiment, the Al based evaluation system 102 may be configured to evaluate the target system performance using the target model (such as, the new model 906) to predict system performance of the target system for evaluating performance of a set of developers from an organization.

Various embodiments provide a method and system for evaluating performance of developers using Artificial Intelligence (Al). The disclosed method and system may receive each of a plurality of performance parameters associated with a setof developers. The system and method may then create one or more feature vectors corresponding to each of the plurality of performance parameters, based on one or morefeatures determined for each of the plurality of performance parameters. The one or morefeature vectors may be created based on a first pre-trained machine learning model. Further, the system and the method may assess the one or more feature vectors, based on the first pre-trained machine learning model. The system and the method may classify the set of developers into one of a set of performance categories based on the assessing of the one or more feature vectors. Thereafter, the system and the method may evaluate the performance of at least one of the set of developers, based on an associated category in the set of performance categories, in response to the classification.

The system and method provide some advantages, like the disclosed system and the method may enable collaboration amongst developers of an organization based on performance evaluation. Further, the disclosed system and method may help managers or reviewers to pro-actively identify developers that may require training on aparticular technology. In addition, the system and method may evaluate performance ofa developer comprehensively, based on several performance parameters, such as faultycode, complexity of code snippets as well as assistance provided by a developer to otherdevelopers in the organization. Such comprehensive evaluation of performance by the Al based evaluation system 102 may facilitate identification of distinguished developers in the organization and similarly aid in providing a necessary appraisal or rating to developers of the organization. Moreover, the system and method may help managers to find developers of a similar type of technical skills. Further, the system and the method may allow managers to fetch details of a developer based on performance parameters.
It will be appreciated that, for clarity purposes, the above description has described embodiments of the disclosure with reference to different functional units and processors. However, it will be apparent that any suitable distribution of functionality between different functional units, processors or domains may be used without detracting from the disclosure. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

## Claims

1. A method for evaluating performance of developers using Artificial Intelligence (AI), the method comprising:
receiving (302), by an AI based evaluation system (102), each of a plurality of performance parameters associated with a set of developers;
creating (304), by the AI based evaluation system, one or more feature vectors corresponding to each of the plurality of performance parameters, based on one or more features determined for each of the plurality of performance parameters, wherein the one or more feature vectors are created based on a first pre-trained machine learning model, wherein the one or more feature vectors are created using one-hot embedding to train an embedding layer of the first pre-trained machine learning model for each of the plurality of performance parameters;
assessing (306), by the AI based evaluation system, the one or more feature vectors, based on the first pre-trained machine learning model;
classifying (308), by the AI based evaluation system, the set of developers into one of a set of performance categories based on the assessing of the one or more feature vectors;
executing (310), by the AI based evaluation system, evaluation of the performance of the set of developers, based on the classifying of the set of developers into one of the set of performance categories;
receiving, by a user interface (110), a query associated with requirement of at least one technical skill;
determining, by the AI based evaluation system, at least one developer from the set of developers in response to the query, based on the evaluation of the performance of the at least one developer; and
displaying data associated with the at least one developer on the user interface.

2. The method of claim 1, wherein evaluating the performance comprises:
computing (404), for each of the set of performance categories, rank for each developer from the set of developers categorized within an associated performance category, based on a second machine learning model, wherein the second machine learning model is trained, and wherein training comprises assigning weights to the one or more features associated with the each of the plurality of performance parameters based on a predefined evaluation criterion; and
ranking (406) each developer from the set of developers for each of the set of performance categories, based on the rank, to evaluate the performance of each developer from the set of developers.

3. The method of claim 2,
wherein the predefined evaluation criterion comprises one or more of a technical skill in demand and an efficiency of a developed product with respect to bugs identified in the developed product,
wherein high weights are assigned to one or more features associated with at least one of the technical skill in demand as compared to a low demand technical skill and bug-free developed product as compared to the developed product with a plurality of bugs, and
wherein the plurality of performance parameters comprise at least one of efficiency of a developed product associated with a module developed for a product, complexity of the developed product, types of support received from peers, feedback or rating received from managers, quality of the module developed for the product, and technical skills of each of the set of developers .

4. The method of claim 1, wherein the set of performance categories includes an excellent performer category, a good performer category, an average performer category, and a bad performer category.

5. The method of claim 1, further comprising:
Identifying (502) a plurality of bugs associated with a module of a product developed by each of the set of developers;
generating (504) a feedback for each of the set of developers, wherein the feedback is generated in response of identifying the plurality of bugs associated with the product developed by each of the set of developers; and
evaluating (506) the performance of at least one of the set of developers, based on the feedback.

6. The method of claim 5, wherein evaluating the performance of at least one of the set of developers is based on an inverse reinforcement learning technique.

7. The method of claim 1, further comprising:
modifying the first pre-trained machine learning model (902) with transferable knowledge for a target system to be evaluated, wherein the transferable knowledge corresponds to optimal values associated with the one or more feature vectors corresponding to each of the plurality of performance parameters;
tuning the first pre-trained machine learning model using specific characteristics of the target system to create a target model (906); and
evaluating performance of the target system using the target model to predict system performance of the target system.

8. The method of claim 1, wherein the first pre-trained machine learning model corresponds to a Q network, and wherein the Q network is configured to receive as input an input observation and an input action and to generate an estimated future reward from the input in accordance with each of the plurality of performance parameters associated with the set of developers.

9. A system (102) for evaluating performance of developers using Artificial Intelligence (AI), the system comprising:
a processor (106); and
a memory (104) communicatively coupled to the processor, wherein the memory stores processor executable instructions, which, on execution, causes the processor to:
receive (302) each of a plurality of performance parameters associated with a set of developers;
create (304) one or more feature vectors corresponding to each of the plurality of performance parameters, based on one or more features determined for each of the plurality of performance parameters, wherein the one or more feature vectors are created based on a first pre-trained machine learning model, wherein the one or more feature vectors are created using one-hot embedding to train an embedding layer of the first pre-trained machine learning model for each of the plurality of performance parameters;
assess (306) the one or more feature vectors, based on the first pre-trained machine learning model;
classify (308) the set of developers into one of a set of performance categories based on the assess of the one or more feature vectors;
execute (310) evaluation of the performance of the set of developers, based on the classify of the set of developers into one of the set of performance categories;
receive a query associated with requirement of at least one technical skill on a user interface (110);
determine at least one developer from the set of developers in response to the query, based on the evaluation of the performance of the at least one developer; and
display data associated with the at least one developer on the user interface.

10. The system of claim 9, wherein the processor executable instructions cause the processor to evaluate the performance by:
computing (404), for each of the set of performance categories, rank for each developer from the set of developers categorized within an associated performance category, based on a second machine learning model; and
ranking (406) each developer from the set of developers for each of the set of performance categories, based on the rank, to evaluate the performance of each developer from the set of developers.

11. The system of claim 10, wherein the processor executable instructions cause the processor to train the second machine learning model, wherein training comprises assigning weights to the one or more features associated with the each of the plurality of performance parameters based on a predefined evaluation criterion.

12. The system of claim 11,
wherein the predefined evaluation criterion comprises one or more of a technical skill in demand and an efficiency of a developed product with respect to bugs identified in the developed product, and
wherein high weights are assigned to one or more features associated with at least one of the technical skill in demand as compared to a low demand technical skill and bug-free developed product as compared to the developed product with a plurality of bugs.

13. The system of claim 9,
wherein the plurality of performance parameters comprise at least one of efficiency of a developed product associated with a module developed for a product, complexity of the developed product, types of support received from peers, feedback or rating received from managers, quality of the module developed for the product, and technical skills of each of the set of developers, and
wherein the set of performance categories includes an excellent performer category, a good performer category, an average performer category, and a bad performer category.

14. The system of claim 9, wherein the processor executable instructions cause the processor to:
Identify (502) a plurality of bugs associated with a module of a product developed by each of the set of developers;
generate (504) a feedback for each of the set of developers, wherein the feedback is generated in response of identifying the plurality of bugs associated with the product developed by each of the set of developers; and
evaluate (506) the performance of at least one of the set of developers, based on the feedback.

15. A non-transitory computer-readable medium storing computer-executable instructions for contextually aligning a title of an article with content within the article, the instructions, when executed by a processor, cause the processor to perform operations comprising:
receiving (302) each of a plurality of performance parameters associated with a set of developers;
creating (304) one or more feature vectors corresponding to each of the plurality of performance parameters, based on one or more features determined for each of the plurality of performance parameters, wherein the one or more feature vectors are created based on a first pre-trained machine learning model, wherein the one or more feature vectors are created using one-hot embedding to train an embedding layer of the first pre-trained machine learning model for each of the plurality of performance parameters;
assessing (306) the one or more feature vectors, based on the first pre-trained machine learning model;
classifying (308) the set of developers into one of a set of performance categories based on the assessing of the one or more feature vectors;
executing (310) evaluation of the performance of the set of developers, based on the classifying of the set of developers into one of the set of performance categories;
receiving a query associated with requirement of at least one technical skill on a user interface (110);
determining at least one developer from the set of developers in response to the query, based on the evaluation of the performance of the at least one developer; and
displaying data associated with the at least one developer on the user interface.

## Patentansprüche

1. Verfahren zur Bewertung der Leistung von Entwicklern unter Verwendung von Künstlicher Intelligenz (KI), wobei das Verfahren umfasst:
Empfangen (302), durch ein KI-basiertes Bewertungssystem (102), jedes einer Vielzahl von Leistungsparametern, die mit einem Satz von Entwicklern assoziiert sind;
Erstellen (304), durch das KI-basierte Bewertungssystem, eines oder mehrerer Merkmalsvektoren, die jedem der Vielzahl von Leistungsparametern entsprechen, auf Grundlage eines oder mehrerer Merkmale, die für jeden der Vielzahl von Leistungsparametern bestimmt werden, wobei der eine oder die mehreren Merkmalsvektoren auf Grundlage eines ersten vortrainierten maschinellen Lernmodells erzeugt werden, wobei der eine oder die mehreren Merkmalsvektoren unter Verwendung einer Ein-Hot-Einbettung erzeugt werden, um eine Einbettungsschicht des ersten vortrainierten maschinellen Lernmodells für jeden der Vielzahl von Leistungsparametern zu trainieren;
Abschätzen (306) des einen oder der mehreren Merkmalsvektoren durch das KI-basierte Bewertungssystem auf Grundlage des ersten vortrainierten maschinellen Lernmodells;
Klassifizieren (308) des Satzes von Entwicklern durch das KI-basierte Bewertungssystem in eine aus einem Satz von Leistungskategorien auf Grundlage der Abschätzung des einen oder der mehreren Merkmalsvektoren;
Ausführen (310), durch das KI-basierte Bewertungssystem, der Bewertung der Leistung des Satzes von Entwicklern, auf Grundlage der Klassifizierung des Satzes von Entwicklern in eine aus dem Satz von Leistungskategorien;
Empfangen einer Abfrage durch eine Benutzerschnittstelle (110), die mit der Anforderung von mindestens einer technischen Fähigkeit assoziiert ist;
Bestimmen, durch das KI-basierte Bewertungssystem, mindestens eines Entwicklers aus dem Satz von Entwicklern als Reaktion auf die Abfrage auf Grundlage der Bewertung der Leistung des mindestens einen Entwicklers; und
Anzeigen von Daten, die mit dem mindestens einen Entwickler assoziiert sind, auf der Benutzerschnittstelle.

2. Verfahren nach Anspruch 1, wobei das Bewerten der Leistung Folgendes umfasst:
Berechnen (404), für jede des Satzes von Leistungskategorien, eines Rangs für jeden Entwickler aus dem Satz von Entwicklern, die innerhalb einer assoziierten Leistungskategorie kategorisiert sind, auf Grundlage eines zweiten maschinellen Lernmodells, wobei das zweite maschinelle Lernmodell trainiert wird und wobei das Training das Zuweisen von Gewichten zu dem einen oder den mehreren Merkmalen, die mit jedem der Vielzahl von Leistungsparametern assoziiert sind, auf Grundlage eines vordefinierten Bewertungskriteriums umfasst; und
Einordnen (406) jedes Entwicklers aus dem Satz von Entwicklern für jede des Satzes von Leistungskategorien, auf Grundlage des Rangs, um die Leistung jedes Entwicklers aus dem Satz von Entwicklern zu bewerten.

3. Verfahren nach Anspruch 2,
wobei das vordefinierte Bewertungskriterium eines oder mehrere von einer nachgefragten technischen Fähigkeit und einer Effizienz eines entwickelten Produkts in Bezug auf in dem entwickelten Produkt identifizierte Fehler umfasst,
wobei einem oder mehreren Merkmalen, die mit mindestens einer der nachgefragten technischen Fähigkeiten assoziiert sind, im Vergleich zu einer wenig nachgefragten technischen Fähigkeiten und einem fehlerfreien entwickelten Produkt im Vergleich zu dem entwickelten Produkt mit einer Vielzahl von Fehlern hohe Gewichte zugewiesen werden, und
wobei die Vielzahl von Leistungsparametern mindestens eines von Effizienz eines entwickelten Produkts, das mit einem für ein Produkt entwickelten Modul assoziiert ist, Komplexität des entwickelten Produkts, Arten von Unterstützung, die von Kollegen erhalten werden, Rückmeldung oder Bewertung, die von Managern erhalten werden, Qualität des für das Produkt entwickelten Moduls und technische Fähigkeiten jedes des Satzes von Entwicklern umfasst.

4. Verfahren nach Anspruch 1, wobei der Satz von Leistungskategorien eine Kategorie für hervorragende Leistungen, eine Kategorie für gute Leistungen, eine Kategorie für durchschnittliche Leistungen und eine Kategorie für schlechte Leistungen enthält.

5. Verfahren nach Anspruch 1, ferner umfassend:
Identifizieren (502) einer Vielzahl von Fehlern, die mit einem Modul eines Produkts assoziiert sind, das von jedem des Satzes von Entwicklern entwickelt wurde;
Erzeugen (504) einer Rückmeldung für jeden des Satzes von Entwicklern, wobei die Rückmeldung als Reaktion auf das Identifizieren der Vielzahl von Fehlern erzeugt wird, die mit dem Produkt assoziiert sind, das von jedem des Satzes von Entwicklern entwickelt wurde; und
Bewerten (506) der Leistung von mindestens einem des Satzes von Entwicklern auf Grundlage der Rückmeldung.

6. Verfahren nach Anspruch 5, wobei das Bewerten der Leistung von mindestens einem aus dem Satz von Entwicklern auf einer Inverse Reinforcement Learning-Technik basiert.

7. Verfahren nach Anspruch 1, ferner umfassend:
Modifizieren des ersten vortrainierten maschinellen Lernmodells (902) mit übertragbarem Wissen für ein zu bewertendes Zielsystem, wobei das übertragbare Wissen optimalen Werten entspricht, die mit dem einen oder den mehreren Merkmalsvektoren assoziiert sind, die jedem der Vielzahl von Leistungsparametern entsprechen;
Abstimmen des ersten vortrainierten maschinellen Lernmodells unter Verwendung spezifischer Merkmale des Zielsystems, um ein Zielmodell (906) zu erstellen; und
Bewerten der Leistung des Zielsystems unter Verwendung des Zielmodells, um die Systemleistung des Zielsystems vorherzusagen.

8. Verfahren nach Anspruch 1, wobei das erste vortrainierte maschinelle Lernmodell einem Q-Netz entspricht und wobei das Q-Netz so konfiguriert ist, dass es als Eingabe eine Eingabebeobachtung und eine Eingabeaktion empfängt und eine geschätzte zukünftige Belohnung aus der Eingabe gemäß jedem der Vielzahl von Leistungsparametern, die mit dem Satz von Entwicklern assoziiert sind, erzeugt.

9. System (102) zur Bewertung der Leistung von Entwicklern unter Verwendung von Künstlicher Intelligenz (KI), wobei das System umfasst:
einen Prozessor (106); und
einen Speicher (104), der kommunikativ mit dem Prozessor gekoppelt ist, wobei der Speicher prozessorausführbare Anweisungen speichert, die bei Ausführung den Prozessor zu Folgendem veranlassen:
Empfangen (302) jedes einer Vielzahl von Leistungsparametern, die mit einem Satz von Entwicklern assoziiert sind;
Erstellen (304) eines oder mehrerer Merkmalsvektoren, die jedem der Vielzahl von Leistungsparametern entsprechen, auf Grundlage eines oder mehrerer Merkmale, die für jeden der Vielzahl von Leistungsparametern bestimmt werden, wobei der eine oder die mehreren Merkmalsvektoren auf Grundlage eines ersten vortrainierten maschinellen Lernmodells erstellt werden, wobei der eine oder die mehreren Merkmalsvektoren unter Verwendung einer Ein-Hot-Einbettung erstellt werden, um eine Einbettungsschicht des ersten vortrainierten maschinellen Lernmodells für jeden der Vielzahl von Leistungsparametern zu trainieren;
Abschätzen (306) des einen oder der mehreren Merkmalsvektoren auf Grundlage des ersten vortrainierten maschinellen Lernmodells;
Klassifizieren (308) des Satzes von Entwicklern in eine aus einem Satz von Leistungskategorien auf Grundlage der Abschätzung des einen oder der mehreren Merkmalsvektoren;
Ausführen (310) der Bewertung der Leistung des Satzes von Entwicklern, auf Grundlage der Klassifizierung des Satzes von Entwicklern in eine aus dem Satz von Leistungskategorien;
Empfangen einer Abfrage, die mit der Anforderung von mindestens einer technischen Fähigkeit assoziiert ist, auf einer Benutzerschnittstelle (110);
Bestimmen mindestens eines Entwicklers aus dem Satz von Entwicklern als Reaktion auf die Abfrage auf Grundlage der Bewertung der Leistung des mindestens einen Entwicklers; und
Anzeigen von Daten, die mit dem mindestens einen Entwickler assoziiert sind, auf der Benutzerschnittstelle.

10. System nach Anspruch 9, wobei die prozessorausführbaren Anweisungen den Prozessor veranlassen, die Leistung zu bewerten durch:
Berechnen (404), für jede des Satzes von Leistungskategorien, eines Rangs für jeden Entwickler aus dem Satz von Entwicklern, die innerhalb einer assoziierten Leistungskategorie kategorisiert sind, auf der Grundlage eines zweiten maschinellen Lernmodells; und
Einordnen (406) jedes Entwicklers aus dem Satz von Entwicklern für jede des Satzes von Leistungskategorien, auf Grundlage des Rangs, um die Leistung jedes Entwicklers aus dem Satz von Entwicklern zu bewerten.

11. System nach Anspruch 10, wobei die prozessorausführbaren Anweisungen den Prozessor veranlassen, das zweite maschinelle Lernmodell zu trainieren, wobei das Training das Zuweisen von Gewichten zu dem einen oder den mehreren Merkmalen, die mit jedem der Vielzahl von Leistungsparametern assoziiert sind, auf Grundlage eines vordefinierten Bewertungskriteriums umfasst.

12. System nach Anspruch 11,
wobei das vordefinierte Bewertungskriterium eines oder mehrere von einer nachgefragten technischen Fähigkeit und einer Effizienz eines entwickelten Produkts in Bezug auf in dem entwickelten Produkt identifizierte Fehler umfasst, und
wobei hohe Gewichte zu einem oder mehreren Merkmalen, die mit mindestens einer der nachgefragten technischen Fähigkeiten assoziiert sind, im Vergleich zu einer wenig nachgefragten technischen Fähigkeiten und zu einem fehlerfreien entwickelten Produkt im Vergleich zu dem entwickelten Produkt mit einer Vielzahl von Fehlern zugewiesen werden.

13. System nach Anspruch 9,
wobei die Vielzahl von Leistungsparametern mindestens eines von Effizienz eines entwickelten Produkts, das mit einem für ein Produkt entwickelten Modul assoziiert ist, Komplexität des entwickelten Produkts, Arten von Unterstützung, die von Kollegen erhalten werden, Rückmeldung oder Bewertung, die von Managern erhalten werden, Qualität des für das Produkt entwickelten Moduls und technische Fähigkeiten jedes des Satzes von Entwicklern umfasst, und
wobei der Satz von Leistungskategorien eine Kategorie für hervorragende Leistungen, eine Kategorie für gute Leistungen, eine Kategorie für durchschnittliche Leistungen und eine Kategorie für schlechte Leistungen umfasst.

14. System nach Anspruch 9, wobei die prozessorausführbaren Anweisungen den Prozessor dazu veranlassen:
Identifizieren (502) einer Vielzahl von Fehlern, die mit einem Modul eines Produkts assoziiert sind, das von jedem des Satzes von Entwicklern entwickelt wurde;
Erzeugen (504) einer Rückmeldung für jeden des Satzes von Entwicklern, wobei die Rückmeldung als Reaktion auf das Identifizieren der Vielzahl von Fehlern erzeugt wird, die mit dem Produkt assoziiert sind, das von jedem des Satzes von Entwicklern entwickelt wurde; und
Bewerten (506) der Leistung von mindestens einem des Satzes von Entwicklern auf Grundlage der Rückmeldung.

15. Nichtflüchtiges computerlesbares Medium, das computerausführbare Anweisungen zum kontextuellen Ausrichten eines Titels eines Artikels an den Inhalt innerhalb des Artikels speichert, wobei die Anweisungen, wenn sie von einem Prozessor ausgeführt werden, den Prozessor veranlassen, Vorgänge auszuführen, die Folgendes umfassen:
Empfangen (302) jedes einer Vielzahl von Leistungsparametern, die mit einem Satz von Entwicklern assoziiert sind;
Erstellen (304) eines oder mehrerer Merkmalsvektoren, die jedem der Vielzahl von Leistungsparametern entsprechen, auf Grundlage eines oder mehrerer Merkmale, die für jeden der Vielzahl von Leistungsparametern bestimmt werden, wobei der eine oder die mehreren Merkmalsvektoren auf Grundlage eines ersten vortrainierten maschinellen Lernmodells erstellt werden, wobei der eine oder die mehreren Merkmalsvektoren unter Verwendung einer Ein-Hot-Einbettung erstellt werden, um eine Einbettungsschicht des ersten vortrainierten maschinellen Lernmodells für jeden der Vielzahl von Leistungsparametern zu trainieren;
Abschätzen (306) des einen oder der mehreren Merkmalsvektoren auf Grundlage des ersten vortrainierten maschinellen Lernmodells;
Klassifizieren (308) des Satzes von Entwicklern in eine aus einem Satz von Leistungskategorien auf Grundlage der Abschätzung des einen oder der mehreren Merkmalsvektoren;
Ausführen (310) der Bewertung der Leistung des Satzes von Entwicklern, auf Grundlage der Klassifizierung des Satzes von Entwicklern in eine aus dem Satz von Leistungskategorien;
Empfangen einer Abfrage, die mit der Anforderung von mindestens einer technischen Fähigkeit assoziiert ist, auf einer Benutzerschnittstelle (110);
Bestimmen mindestens eines Entwicklers aus dem Satz von Entwicklern als Reaktion auf die Abfrage auf Grundlage der Bewertung der Leistung des mindestens einen Entwicklers; und
Anzeigen von Daten, die mit dem mindestens einen Entwickler assoziiert sind, auf der Benutzerschnittstelle.

## Revendications

1. Procédé d'évaluation d'une performance de développeurs en utilisant l'intelligence artificielle (IA), le procédé comprenant :
la réception (302), par un système d'évaluation basé sur l'IA (102), de chacun d'une pluralité de paramètres de performance associés à un ensemble de développeurs ;
la création (304), par le système d'évaluation basé sur l'IA, d'un ou plusieurs vecteurs de caractéristiques correspondant à chacun de la pluralité de paramètres de performance, sur la base d'une ou plusieurs caractéristiques déterminées pour chacun de la pluralité de paramètres de performance, dans lequel les un ou plusieurs vecteurs de caractéristiques sont créés sur la base d'un premier modèle d'apprentissage automatique pré-entraîné, dans lequel les un ou plusieurs vecteurs de caractéristiques sont créés en utilisant une intégration one-hot pour entraîner une couche d'intégration du premier modèle d'apprentissage automatique pré-entraîné pour chacun de la pluralité de paramètres de performance ;
l'évaluation (306), par le système d'évaluation basé sur l'IA, des un ou plusieurs vecteurs de caractéristiques, sur la base du premier modèle d'apprentissage automatique pré-entraîné ;
la classification (308), par le système d'évaluation basé sur l'IA, de l'ensemble de développeurs dans l'une d'un ensemble de catégories de performance sur la base de l'évaluation des un ou plusieurs vecteurs de caractéristiques ;
l'exécution (310), par le système d'évaluation basé sur l'IA, d'une évaluation de la performance de l'ensemble de développeurs, sur la base de la classification de l'ensemble de développeurs dans l'une de l'ensemble des catégories de performance ;
la réception, par une interface utilisateur (110), d'une requête associée à une exigence d'au moins une compétence technique ;
la détermination, par le système d'évaluation basé sur l'IA, d'au moins un développeur parmi l'ensemble de développeurs en réponse à la requête, sur la base de l'évaluation de la performance de l'au moins un développeur ; et
l'affichage de données associées à l'au moins un développeur sur l'interface utilisateur.

2. Procédé de la revendication 1, dans lequel l'évaluation de la performance comprend :
le calcul (404), pour chacune de l'ensemble de catégories de performance, d'un rang pour chaque développeur de l'ensemble de développeurs classés dans une catégorie de performance associée, sur la base d'un second modèle d'apprentissage automatique, dans lequel le second modèle d'apprentissage automatique est entraîné, et dans lequel l'entraînement comprend l'attribution de poids à une ou plusieurs caractéristiques associées à chacun de la pluralité de paramètres de performance sur la base d'un critère d'évaluation prédéfini ; et
le classement (406) de chaque développeur de l'ensemble de développeurs pour chacune de l'ensemble de catégories de performance, sur la base du rang, afin d'évaluer la performance de chaque développeur de l'ensemble de développeurs.

3. Procédé selon la revendication 2,
dans lequel le critère d'évaluation prédéfini comprend une ou plusieurs parmi une compétence technique demandée et une efficacité d'un produit développé par rapport à des bogues identifiés dans le produit développé,
dans lequel des poids élevés sont attribués à une ou plusieurs caractéristiques associées à au moins un parmi la compétence technique demandée par rapport à une compétence technique peu demandée et un produit développé exempt de bogues par rapport à un produit développé comportant une pluralité de bogues, et
dans lequel la pluralité de paramètres de performance comprend au moins un parmi une efficacité d'un produit développé associé à un module développé pour un produit, une complexité du produit développé, des types de soutien reçus de la part de pairs, un retour d'information ou une évaluation reçue de la part de responsables, une qualité du module développé pour le produit et des compétences techniques de chacun de l'ensemble de développeurs.

4. Procédé selon la revendication 1, dans lequel l'ensemble de catégories de performance comprend une catégorie d'excellents résultats, une catégorie de bons résultats, une catégorie de résultats moyens et une catégorie de mauvais résultats.

5. Procédé selon la revendication 1, comprenant en outre :
l'identification (502) d'une pluralité de bogues associés à un module d'un produit développé par chacun de l'ensemble de développeurs ;
la génération (504) d'un retour d'information pour chacun de l'ensemble de développeurs, dans lequel le retour d'information est généré en réponse à l'identification de la pluralité de bogues associés au produit développé par chacun de l'ensemble de développeurs ; et
l'évaluation (506) de la performance d'au moins un de l'ensemble de développeurs, sur la base du retour d'information.

6. Procédé selon la revendication 5, dans lequel l'évaluation de la performance d'au moins un de l'ensemble développeurs est basée sur une technique d'apprentissage par renforcement inverse.

7. Procédé selon la revendication 1, comprenant en outre :
la modification du premier modèle d'apprentissage automatique pré-entraîné (902) avec des connaissances transférables pour un système cible à évaluer, dans lequel les connaissances transférables correspondent à des valeurs optimales associées à un ou plusieurs vecteurs de caractéristiques correspondant à chacun de la pluralité de paramètres de performance ;
la mise au point du premier modèle d'apprentissage automatique pré-entraîné en utilisant des caractéristiques spécifiques du système cible pour créer un modèle cible (906) ; et
l'évaluation de la performance du système cible en utilisant le modèle cible pour prédire la performance de système du système cible.

8. Procédé selon la revendication 1, dans lequel le premier modèle d'apprentissage automatique pré-entraîné correspond à un réseau Q, et dans lequel le réseau Q est configuré pour recevoir en entrée une observation d'entrée et une action d'entrée et pour générer une récompense future estimée à partir de l'entrée conformément à chacun de la pluralité de paramètres de performance associés à l'ensemble de développeurs.

9. Système (102) d'évaluation d'une performance de développeurs en utilisant l'intelligence artificielle (IA), le système comprenant :
un processeur (106) ; et
une mémoire (104) couplée de manière communicative au processeur, dans lequel la mémoire stocke des instructions exécutables par processeur, qui, lors de l'exécution, amènent le processeur à :
recevoir (302) chacun d'une pluralité de paramètres de performance associés à un ensemble de développeurs ;
créer (304) un ou plusieurs vecteurs de caractéristiques correspondant à chacun de la pluralité de paramètres de performance, sur la base d'une ou plusieurs caractéristiques déterminées pour chacun de la pluralité de paramètres de performance, dans lequel les un ou plusieurs vecteurs de caractéristiques sont créés sur la base d'un premier modèle d'apprentissage automatique pré-entraîné, dans lequel les un ou plusieurs vecteurs de caractéristiques sont créés en utilisant une intégration one-hot pour entraîner une couche d'intégration du premier modèle d'apprentissage automatique pré-entraîné pour chacun de la pluralité de paramètres de performance ;
évaluer (306) les un ou plusieurs vecteurs de caractéristiques, sur la base du premier modèle d'apprentissage automatique pré-entraîné ;
classifier (308) l'ensemble de développeurs dans l'une d'un ensemble de catégories de performance sur la base de l'évaluation des un ou plusieurs vecteurs de caractéristiques ;
exécuter (310) une évaluation de la performance de l'ensemble de développeurs, sur la base de la classification de l'ensemble de développeurs dans l'une de l'ensemble de catégories de performance ;
recevoir une requête associée à une exigence d'au moins une compétence technique sur une interface utilisateur (110) ;
déterminer au moins un développeur parmi l'ensemble de développeurs en réponse à la requête, sur la base de l'évaluation de la performance de l'au moins un développeur ; et
afficher des données associées à l'au moins un développeur sur l'interface utilisateur.

10. Système selon la revendication 9, dans lequel les instructions exécutables par processeur amènent le processeur à évaluer la performance par :
le calcul (404), pour chacune de l'ensemble de catégories de performance, d'un rang pour chaque développeur de l'ensemble de développeurs classés dans une catégorie de performance associée, sur la base d'un second modèle d'apprentissage automatique ; et
le classement (406) de chaque développeur de l'ensemble de développeurs pour chacune de l'ensemble de catégories de performance, sur la base du rang, afin d'évaluer la performance de chaque développeur de l'ensemble de développeurs.

11. Système selon la revendication 10, dans lequel les instructions exécutables par processeur amènent le processeur à entraîner le second modèle d'apprentissage automatique, dans lequel l'entraînement comprend l'attribution de poids à une ou plusieurs caractéristiques associées à chacun de la pluralité de paramètres de performance sur la base d'un critère d'évaluation prédéfini.

12. Système selon la revendication 11,
dans lequel le critère d'évaluation prédéfini comprend une ou plusieurs parmi une compétence technique demandée et une efficacité d'un produit développé par rapport à des bogues identifiés dans le produit développé, et
dans lequel des poids élevés sont attribués à une ou plusieurs caractéristiques associées à au moins un parmi la compétence technique demandée par rapport à une compétence technique peu demandée et un produit développé exempt de bogues par rapport à un produit développé comportant une pluralité de bogues.

13. Système selon la revendication 9,
dans lequel la pluralité de paramètres de performance comprend au moins un parmi une efficacité d'un produit développé associé à un module développé pour un produit, une complexité du produit développé, des types de soutien reçus de la part de pairs, un retour d'information ou une évaluation reçue de la part de responsables, une qualité du module développé pour le produit et des compétences techniques de chacun de l'ensemble de développeurs de l'ensemble, et
dans lequel l'ensemble de catégories de performance comprend une catégorie d'excellents résultats, une catégorie de bons résultats, une catégorie de résultats moyens et une catégorie de mauvais résultats.

14. Système selon la revendication 9, dans lequel les instructions exécutables par processeur amènent le processeur à :
identifier (502) une pluralité de bogues associés à un module d'un produit développé par chacun de l'ensemble de développeurs ;
générer (504) un retour d'information pour chacun de l'ensemble de développeurs, dans lequel le retour d'information est généré en réponse à l'identification de la pluralité de bogues associés au produit développé par chacun de l'ensemble de développeurs ; et
évaluer (506) la performance d'au moins un de l'ensemble de développeurs, sur la base du retour d'information.

15. Support non transitoire lisible par ordinateur stockant des instructions exécutables par ordinateur pour l'alignement contextuel d'un titre d'un article avec le contenu de l'article, les instructions, lorsqu'elles sont exécutées par un processeur, amènent le processeur à effectuer des opérations comprenant :
la réception (302) de chacun d'une pluralité de paramètres de performance associés à un ensemble de développeurs ;
la création (304) d'un ou plusieurs vecteurs de caractéristiques correspondant à chacun de la pluralité de paramètres de performance, sur la base d'une ou plusieurs caractéristiques déterminées pour chacun de la pluralité de paramètres de performance, dans lequel les un ou plusieurs vecteurs de caractéristiques sont créés sur la base d'un premier modèle d'apprentissage automatique pré-entraîné, dans lequel les un ou plusieurs vecteurs de caractéristiques sont créés en utilisant une intégration one-hot pour entraîner une couche d'intégration du premier modèle d'apprentissage automatique pré-entraîné pour chacun de la pluralité de paramètres de performance ;
l'évaluation (306) des un ou plusieurs vecteurs de caractéristiques, sur la base du premier modèle d'apprentissage automatique pré-entraîné ;
la classification (308) de l'ensemble de développeurs dans l'une d'un ensemble de catégories de performance sur la base de l'évaluation des un ou plusieurs vecteurs de caractéristiques ;
l'exécution (310) d'une évaluation de la performance de l'ensemble de développeurs, sur la base de la classification de l'ensemble de développeurs dans l'une de l'ensemble de catégories de performance ;
la réception d'une requête associée à une exigence d'au moins une compétence technique sur une interface utilisateur (110) ;
la détermination d'au moins un développeur parmi l'ensemble de développeurs en réponse à la requête, sur la base de l'évaluation de la performance de l'au moins un développeur ; et
l'affichage de données associées à l'au moins un développeur sur l'interface utilisateur.
